# EUROPÄISCHE PATENTANMELDUNG

(11) **EP 2 664 493 A1**
(43) Veröffentlichungstag der Anmeldung: **20.11.2013**
(21) Anmeldenummer: 12168554.9
(22) Anmeldetag: 18.05.2012
(51) Int. Cl.: B60P 3/00

(54) **Vorrichtung zur Sicherung von Traggestellen in einem Innenlader**

(71) Anmelder: Van Huët Glastransport B.V., 6596 AB Milsbeek (NL)
(72) Erfinder: Emons, Daan Johannes Martinus Christiaan, 6604 GV Wijchen (NL)
(74) Vertreter: Dörner, Kötter & Kollegen

(57) **Zusammenfassung**

Die Erfindung betrifft eine Vorrichtung zur Sicherung von mit großflächigen Glasscheibenpaketen bestückten Traggestellen in einem Innenlader, umfassend einen an einer Seitenwand des Innenladers fixierbaren Lagerbock, der über ein Gestänge mit einer Andruckplatte verbunden ist, wobei das Gestänge durch einen schwenkbar mit dem Lagerbock (1) verbundenen Stützarm (2) gebildet ist, der mit einer oberhalb des Stützarms (2) an dem Lagerbock angeordneten Zustelleinrichtung verbunden ist.

## Beschreibung

Die Erfindung betrifft eine Vorrichtung zur Sicherung von mit großflächigen Glasscheibenpaketen bestückten Traggestellen in einem Innenlader nach dem Oberbegriff des Patentanspruchs 1.

Für den Transport von Glasscheibenpaketen, die eine Länge von mehr als sechs Meter und eine Höhe von mehr als drei Meter aufweisen können, kommen so genannte Innenlader zum Einsatz. Die Glasscheibenpakete werden auf speziellen A-oder L-förmigen Traggestellen zusammengefasst, welche von Tragprofilen des Innenladers aufgenommen werden können.

Bei einem Innenlader handelt es sich um eine spezielle Form des Sattelaufliegers. Diese Sattelauflieger haben keine durchgehende Achse zwischen den Rädern, sondern eine besondere Form der Einzelradaufhängung, die so genannten Einzelradschwingen oder Achsböcke. Ein Innenlader weist ein Chassis auf, welches aus zwei Längsträgern gebildet ist, die im vorderen Bereich über Querträger verbunden sind, so dass etwa die Form einer Stimmgabel gebildet ist. An das Chassis sind die Seitenwände des Innenladers befestigt, welche heckseitig über eine Tür miteinander verbunden sind.

Alle bisher bekannten und im Einsatz befindlichen Ladungssicherungssysteme für Innenlader sind derart ausgelegt, dass sie mit allen Gestellarten (A- und L-Gestelle) und nahezu allen Glasladungen, wie geteilte Bandmaße in den unterschiedlichsten Abmessungen oder Einzelscheiben, gesichert werden können. Die Steuerung dieser Sicherungsanlagen erfolgt elektrohydraulisch und ist sehr aufwendig, wobei die elektrische Versorgung über die Zugmaschine erfolgt. Bei den bekannten Systemen werden Andruckplatten hydraulisch an das Glaspaket und an die Rückseite der L-Gestelle geschwenkt. Der hydraulische Anpressdruck kann hierbei je nach System bis zu ca. 70 bar betragen. Dieser Druck wird ständig automatisch geprüft und wenn erforderlich automatisch nachreguliert. Bei Kurvenfahrt sowie Ausweichmanövern des Innenladers kann sich der Druck durch die auf die Glaspakete einwirkenden Fliehkräfte bis auf über 200 bar aufbauen. Daher gestaltet sich die Hydraulik sowie auch die gesamte Mechanik der bekannten Sicherungssysteme sehr aufwendig. Darüber hinaus weisen die Systeme ein enormes Eigengewicht auf, wodurch das verbleibende zulässige Ladegewicht des Innenladers reduziert ist.

Hier will die Erfindung Abhilfe schaffen. Der Erfindung liegt die Aufgabe zu Grunde, eine Vorrichtung zur Sicherung von mit großflächigen Glasscheibenpaketen bestückten Traggestellen in einem Innenlader zu schaffen, welche einfach aufgebaut ist und die ein gegenüber den vorbekannten Systemen reduziertes Eigengewicht aufweist. Gemäß der Erfindung wird diese Aufgabe durch die Merkmale des kennzeichnenden Teils des Patentanspruchs 1 gelöst.

Mit der Erfindung ist eine Vorrichtung zur Sicherung von mit großflächigen Glasscheibenpaketen bestückten Traggestellen in einem Innenlader geschaffen, welche einfach aufgebaut ist und die ein gegenüber den vorbekannten Systemen deutlich reduziertes Eigengewicht aufweist. Dabei liegt der vorliegenden Erfindung die Überlegung zu Grunde, dass der Anteil an Standardladungen, das sind insbesondere Jumbogläser mit den Abmessungen 6000 mm x 3210 mm, auf L-Gestellen zunehmend größer wird. Bei diesen Standardladungen ist das erhebliche Ausmaß der Variablen Ladungssicherungsmöglichkeiten, wie sie die komplizierten Ladungssicherungssysteme aus dem Stand der Technik abdecken, nicht mehr erforderlich. Gleichzeitig kann das L-Gestellt auf Grund seiner größeren Stellfläche auch größere Ladungen aufnehmen, was jedoch an dem jetzigen Eigengewicht der Glasinnenlader mit den aufwendigen Ladungssicherungssystemen scheitert. Durch die Ausbildung des Gestänges durch einen schwenkbar mit dem Lagerbock verbundenen Stützarm, der mit einem oberhalb des Stützarms an dem Lagerbock angeordneten Zylinder verbunden ist, ist ein rein mechanisches System gebildet, welche insbesondere ohne eine aufwendige und kostenintensive elektrohydraulische Steuerung auskommt.

In Ausgestaltung der Erfindung umfasst die Zustelleinrichtung eine Zahnstange und/oder eine Spindel, welche manuell oder motorisch bedienbar ist. Hierdurch ist ein autarkes mechanisches System erzielt, das insbesondere keine Hydraulik noch Druckluftversorgung erfordert.

In alternativer Ausgestaltung der Erfindung ist die Zustellvorrichtung als Zylinder, vorzugsweise als Druckluftzylinder ausgebildet. Hier durch ist eine einfache Bedienung der Sicherungsanlage ermöglicht. Das Gegenlager für den Druckluftzylinder ist am Stützarm angebracht. Zum Öffnen der Anlage wird der Zylinder mit Druckluft beaufschlagt, welcher hierdurch den Stützarm mit der an diesem angeordneten Andruckplatte nach oben bewegt. Zum Schließen der Anlage kann der in dem Druckluftzylinder anstehende Druck über ein Drosselventil entlüftet werden; die Zustellung der Andruckplatte erfolgt im Wesentlichen über deren Eigengewicht. Durch den gedrosselten Ablass der Druckluft ist eine sanfte Anlage der Andruckplatte an dem Glaspaket ermöglicht. Nach dem Absenken der Andruckplatte wird der zweiseitig wirkende Druckluftzylinder wiederum mit Druckluft beaufschlagt, wodurch die selbsthemmende Sicherung des Stützarms zusätzlich abgesichert wird.

In Weiterbildung der Erfindung ist der Stützarm in seiner Länge veränderbar ausgebildet, wobei der Stützarm einen Grundarm umfasst, in dem ein Schiebling verschiebbar angeordnet ist und der an seinem freien Ende mit der Andruckplatte verbunden ist. Hierdurch ist eine einfache Anpassung der Vorrichtung an unterschiedliche Abmaße von Glasscheibenpaketen ermöglicht. Hierzu ist der Schiebling vorzugsweise an dem Grundarm in unterschiedlichen Längenpositionen fixierbar ausgebildet. Selbstverständlich sind auch andere teleskopierbare Ausgestaltungen des Stützarms einsetzbar.

In weiterer Ausgestaltung der Erfindung ist der Grundarm mit einem Lochraster versehen, in das an dem Schiebling angeordnete Rastelemente einrastbar sind. Hier durch ist eine einfache und zugleich zuverlässige mechanische Sicherung einer eingestellten Längenposition ermöglicht. Alternativ kann die Sicherung auch durch einen separaten Stift erfolgen, wobei an dem Schiebling entsprechende Bohrungen angeordnet sind, die in unterschiedlichen Längenpositionen mit Bohrungen des Lochrasters fluchten.

In alternativer Ausgestaltung der Erfindung ist der Schiebling mit dem Grundarm über eine Spindel verbunden, über welche die Länge des Stützarms einstellbar ist. Die Spindel kann dabei mit einem Elektroantrieb verbunden sein, sodass ein manueller Eingriff zur Längenveränderung des Stützarms nicht erforderlich ist.

In Weiterbildung der Erfindung ist an dem Lagerbock ein Anschlag angeordnet, welcher derart ausgebildet ist, dass der Stützarm in verschwenkter Position vor durchlaufen des Totpunktes seiner Schwenkbahn auf dem Anschlag aufliegt. Hierdurch ist eine einfache selbsthemmende Positionierung des Stützarms über eine Schwenkbewegung ermöglicht, wobei gleichzeitig verhindert wird, dass der Stützarm in eine Totpunktstellung fallen kann.

Gegenstand der Erfindung ist weiterhin ein Innenlader für den Transport für mit großflächigen Glasscheibenpaketen bestückten Traggestellen, in dem wenigstens eine Vorrichtung, vorzugsweise zwei gegenüberliegend angeordnete Vorrichtungen der vorgenannten Art zur Sicherung der Traggestelle angeordnet sind. Dabei sind bevorzugt entlang der gegenüberliegenden Seitenwände des Innenladers Führungsschienen angeordnet, in denen die Vorrichtungen zur Sicherung der Traggestelle verschiebbar gelagert sind. Hierdurch ist eine einfache Ausrichtung der Vorrichtungen an die jeweilige Ladung ermöglicht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer Sicherungsvorrichtung;

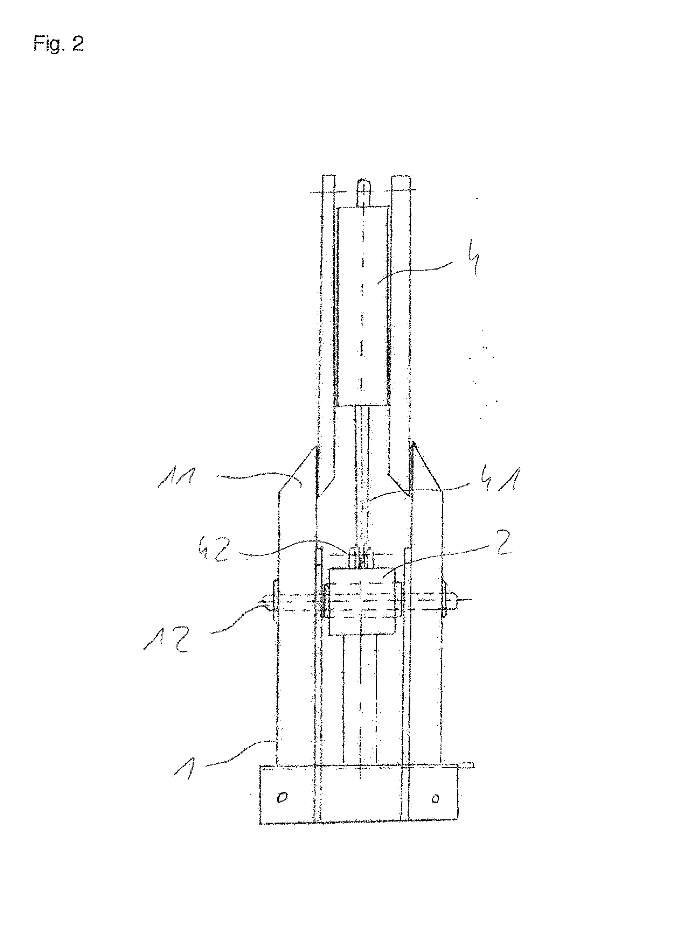

- Figur 2: die Darstellung der Sicherungsvorrichtung aus Figur 1 in der Ansicht von hinten
- Figur 3: die schematische Darstellung eines Innenladers mit zwei gegenüberliegend angeordneten Sicherungsvorrichtungen.

Die als Ausführungsbeispiel gewählte Vorrichtung zur Sicherung von mit großflächigen Glasscheibenpaketen 81 bestückten Traggestellen 8 in einem Innenlader 7 besteht im Wesentlichen aus einem Lagerbock 1, an dem ein Stützarm 2 schwenkbar befestigt ist, an dem endseitig eine Andruckplatte 3 angeordnet ist, wobei der Stützarm 2 mit einem Druckluftzylinder 4 verbunden ist, über den der Stützarm 2 schwenkbar ist. Weiterhin ist ein Anschlag 5 zur Schwenkbegrenzung des Stützarms 2 angeordnet.

Der Lagerbock 1 ist im Ausführungsbeispiel als Aluminiumkonstruktion ausgebildet. Er weist zwei Seitenwangen 11 auf, zwischen denen der Stützarm 2 angeordnet ist. Der Stützarm 2 ist über einen durch die Seitenwangen 11 geführten Edelstahlbolzen 12 schwenkbar mit dem Lagerbock 1 verbunden. Oberhalb des Edelstahlbolzens 12 ist zwischen den Seitenwangen 11 weiterhin der Druckluftzylinder 4 angeordnet. Der Druckluftzylinder 4 ist ebenfalls über einen Edelstahlbolzen 12 der durch die Seitenwangen 11 geführt ist mit dem Lagerbock 1 schwenkbar verbunden. Der Kolben 41 des Druckluftzylinders ist an seinen dem Druckluftzylinder 4 gegenüberliegenden Ende mit dem Stützarm 2 über einen Bolzen 42 verbunden. Der Lagerbock 1 ist an seiner Unterseite mit Führungselementen 13 versehen, welche im montierten Zustand in die Führungsschienen 6 eines Innenladers 7 eingreifen, über welche die Vorrichtung verschiebbar angeordnet werden kann.

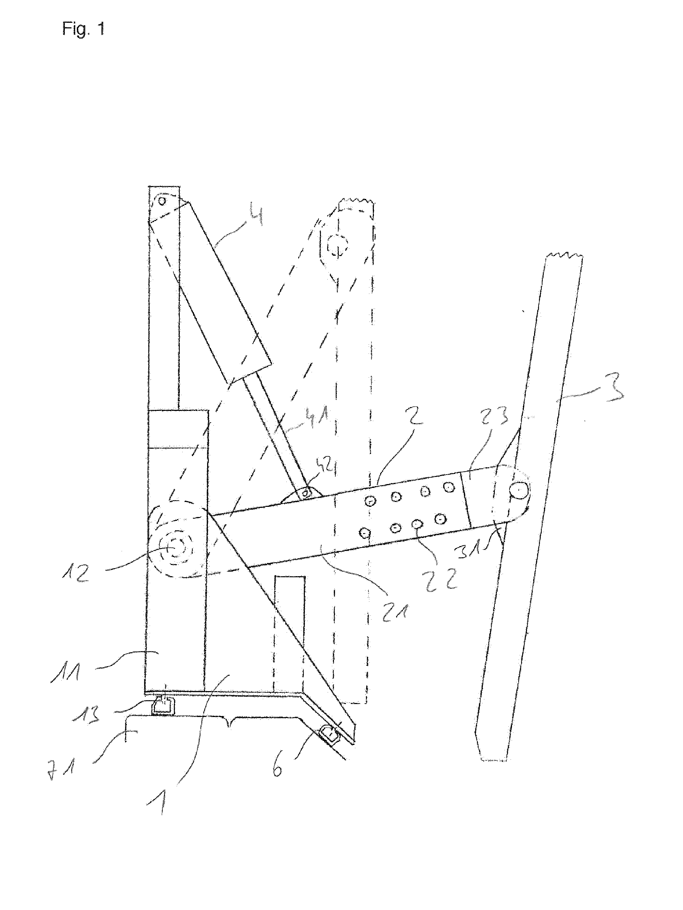

Der Stützarm 2 ist im Wesentlichen gebildet durch einen Grundarm 21, der einen Schiebling 23 aufnimmt. Grundarm 21 und Schiebling 23 sind jeweils mit einem Lochraster 22 versehen. Über das Lochraster 22 ist der Schiebling 23 in unterschiedlichen Längenpositionen an dem Grundarm 21 über Bolzen oder Stifte, welche durch überstimmende Bohrungen der beiden Lochraster 22 durchführbar sind, festlegbar. Hier durch sind unterschiedliche Längen des Stützarms 2 realisierbar. In Figur 1 ist der Stützarm 2 in unterschiedlichen Schwenkpositionen dargestellt.

Die Andruckplatte 3 ist im Ausführungsbeispiel in Form eines Aluminiumrahmens ausgebildet, der an seiner an ein Glasscheibenpaket 81 eines Traggestells 8 anlegbaren Seite mit einer Gummischicht versehen ist. Die Andruckplatte 3 weist etwa mittig eine Lasche 31 auf, über welche sie schwenkbar mit dem Schiebling 23 des Stützarms 2 verbunden ist.

Der Anschlag 5 ist im Ausführungsbeispiel durch einen Aluminiumquader gebildet, welcher mit einer - nicht dargestellten - U-förmigen Ausnehmung versehen ist, in welche der Grundarm 21 des Stützarms 2 aus geschwenkter Position anlegbar ist.

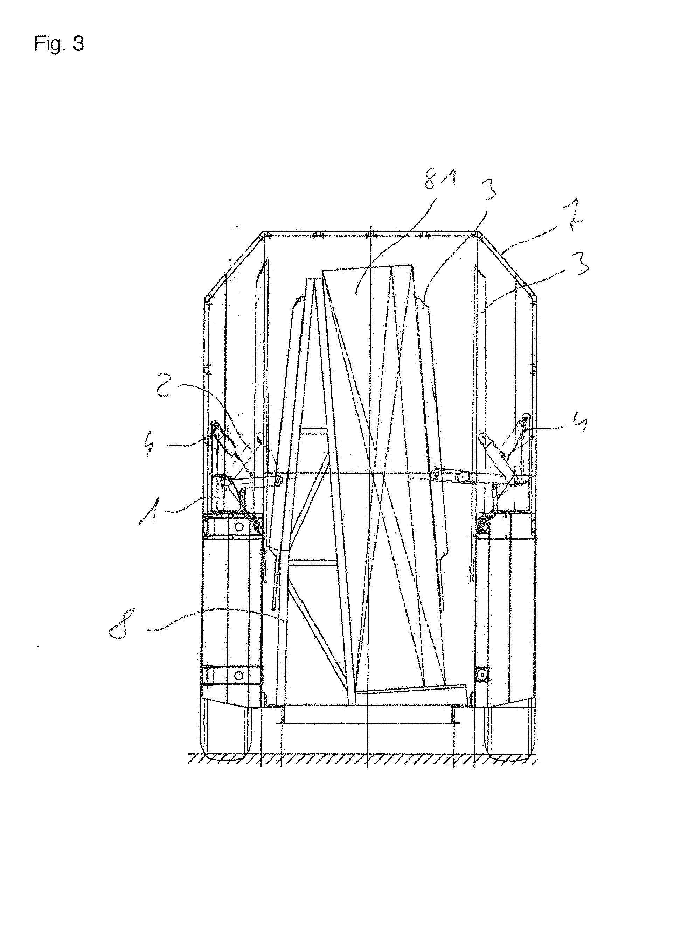

In Figur 3 ist eine beispielhafte Anordnung der erfindungsgemäßen Vorrichtungen in einem Innenlader 7 dargestellt. Hierbei sind gegenüberliegend jeweils zwei Vorrichtungen in auf den Seitenwangen 71 des Innenladers 7 angeordneten Führungsschienen 6 positioniert. Dabei sind zur Veranschaulichung nur bei einem Vorrichtungspaar die Andruckplatten 3 an das Glasscheibenpaket 81 bzw. das Traggestell 8 angelegt. Die Druckluftzylinder 4 der Vorrichtungen sind über - nicht dargestellte - Pneumatikleitungen mit der Druckluftsteuerung der Zugmaschine verbunden. Die im Wesentlichen aus Aluminiumprofilen gebildeten Vorrichtungen weisen ein geringes Eigengewicht auf, wodurch das zulässige Zuladungsgewicht des Innenladers 7 maximiert ist. Durch die einfache und zugleich zuverlässige Mechanik auf dem Prinzip der Selbsthemmung sind aufwendige Steuerungen, wie sie im Stand der Technik zu finden sind, nicht erforderlich.

## Patentansprüche

1. Vorrichtung zur Sicherung von mit großflächigen Glasscheibenpaketen bestückten Traggestellen in einem Innenlader, umfassend einen an einer Seitenwand des Innenladers fixierbaren Lagerbock, der über ein Gestänge mit einer Andruckplatte verbunden ist, **dadurch gekennzeichnet, dass** das Gestänge durch einen schwenkbar mit dem Lagerbock (1) verbundenen Stützarm (2) gebildet ist, der mit einer oberhalb des Stützarms (2) an dem Lagerbock angeordneten Zustelleinrichtung verbunden ist.

2. Vorrichtung nach Anspruch 1 **dadurch gekennzeichnet, dass** die Zustelleinrichtung eine Zahnstange und/oder eine Spindel umfasst, welche manuell oder motorisch bedienbar ist.

3. Vorrichtung nach Anspruch 1, **dadurch gekennzeichnet, dass** die Zustelleinrichtung durch einen Zylinder gebildet ist, der vorzugsweise als Druckluftzylinder (4) ausgebildet ist.

4. Vorrichtung nach einem der Ansprüche 1 bis 3, **dadurch gekennzeichnet, dass** der Stützarm (2) in seiner Länge veränderbar ausgebildet ist, wobei der Stützarm(2) einen Grundarm (21) umfasst, in dem ein Schiebling (23) verschiebbar angeordnet ist und der an seinem freien Ende mit der Andruckplatte verbunden ist.

5. Vorrichtung nach Anspruch 4, **dadurch gekennzeichnet, dass** der Schiebling (23) an dem Grundarm (21) in unterschiedlichen Längenpositionen fixierbar ausgebildet ist.

6. Vorrichtung nach Anspruch 5, **dadurch gekennzeichnet, dass** der Grundarm (21) mit einem Lochraster (22) versehen ist, in das an dem Schiebling (23) angeordnete Rastelemente einrastbar sind.

7. Vorrichtung nach Anspruch 4 oder 5, **dadurch gekennzeichnet, dass** der Schiebling (23) mit dem Grundarm (21) über eine Spindel verbunden ist, über welche die Länge des Stützarms (2) einstellbar ist.

8. Vorrichtung nach einem der vorgenannten Ansprüche, **dadurch gekennzeichnet, dass** an dem Lagerbock (1) ein Anschlag (5) angeordnet ist, welcher derart ausgebildet ist, dass der Stützarm (2) in verschwenkter Position vor Durchlaufen des Totpunktes seiner Schwenkbahn auf dem Anschlag (5) aufliegt.

9. Innenlader (7) für den Transport von mit großflächigen Glasscheibenpaketen (81) bestückten Traggestellen (8), mit wenigstens einer Vorrichtung, vorzugsweise zwei gegenüberliegend angeordneten Vorrichtungen zur Sicherung der Traggestelle (8) nach einem der vorgenannten Ansprüche.

10. Innenlader nach Anspruch 9, **dadurch gekennzeichnet, dass** entlang der gegenüberliegenden Seitenwände des Innenladers (8) Führungsschienen (6) angeordnet sind, in denen die Vorrichtungen zur Sicherung der Traggestelle (8) verschiebbar gelagert sind.
